# EUROPEAN PATENT APPLICATION

(11) **EP 4 296 243 A1**
(43) Date of publication of application: **27.12.2023**
(21) Application number: 22179847.3
(22) Date of filing: 20.06.2022
(51) Int. Cl.: C03C 3/087, C03B 5/225

(54) **MIXTURE OF RAW MATERIALS, METHOD FOR REDUCING THE CONTENT OF SODIUM OXIDE (NA2O) IN GLASS AND CONTAINER GLASS**

(71) Applicant: IPGR e. V., 52076 Aachen (DE)
(72) Inventor: Güçlü, Fatih Mehmet, 52072 Aachen (DE); Roos, Christian, 65388 Schlangenbad (DE); Conradt, Reinhard, 52072 Aachen (DE)
(74) Representative: Bauer, Dirk

(57) **Abstract**

The invention relates to a mixture of raw materials for production of container glass comprising
- Silicon dioxide (SiO₂),
- Aluminum oxide (Al₂O₃),
- Magnesium carbonate (MgCO₃) or magnesium oxide (MgO) and
- Calcium carbonate (CaCO₃) or calcium oxide (CaO).

In order to enable a cost-effective production of glass which is characterized by a good energy balance, it is proposed according to the present invention that of the mixture is free of sodium carbonate (Na₂CO₃).

Further the invention relates to a method for continuously reducing the content of sodium oxide (Na₂O) in glass and container glass resulting at least partially from the mixture.

## Description

### Preamble

The present invention relates to a mixture of raw materials for production of container glass. Further, the invention relates to a method for continuously reducing the content of sodium oxide (Na₂O) in glass and container glass itself.

### State Of The Art

Container glass is typically used for glass bottles, glass jars, glass drinkware and glass bowls. To produce container glass, a batch is added to a furnace, typically in powder form, by distributing the same on top of an existing glass melt or by inserting the batch from the side of the furnace into an already existing glass melt. The batch comprises a mixture of raw materials and cullet. The cullet is derived from crushing recycled container glass and other glass types into small pieces. To melt the resulting batch burners are arranged above the glass melt and the melting is supported by electrical boosting.

The mixture of raw materials is weighed and mixed depending on the requirement of the final glass chemical composition. The mixture of raw materials which is entering to the furnace is called as "batch" which gives the desired glass composition at the end of the melting and forming processes. Batch can be 100% raw materials mixture or cullet which is used glass articles that can be added to the raw materials mixture. After forming the molten glass with some methods, the content of the glass article can be defined chemically. This gives the "chemical composition" of the final article.

The main constituent of most mixture for container glass production is silicon dioxide (SiO₂). To start the dissolution of silicon dioxide (SiO₂) grains the temperature of the glass melt should exceed a certain temperature, also known as "liquid temperature" (T_{liq}). If the temperature in the furnace exceeds the "liquid temperature", the silicon dioxide (SiO₂) grains will be completely molten. However, pure silicon dioxide (SiO₂) has a high glass melting point of over 2,300°C. To lower the melting temperature to about 1,500 °C, sodium carbonate (Na₂CO₃), also known as washing soda, soda ash and soda crystals, is added to the batch. However, sodium carbonate (Na₂CO₃) reduces the chemical durability of glass and makes glass water soluble. To overcome this drawback calcium carbonate (CaCO₃), magnesium carbonate (MgCO₃) and/or aluminum oxide (Al₂O₃) are often added to the batch. Many glasses have other ingredients added to change the properties of the glass melt, depending on their intended function. The typical chemical composition of container glass can be listed as 70 - 74 wt. % silicon dioxide (SiO₂), 8 - 12.5 wt. % calcium oxide (CaO) 11 - 15 wt. % sodium oxide (Na₂O), 0.5 - 3.5 wt. % magnesium oxide (MgO), 1 -3 wt. %. aluminum oxide (Al₂O₃) and 0.03 - 0.13 wt. % Iron (III) oxide (Fe₂O₃). Each above listed oxide has a different function in the glass melting process and in the glass itself. The oxides are introduced via natural and synthetic raw materials. Typically used are glass grade sand, limestone, dolomite, feldspar and soda ash. For the adjustment of the redox conditions, the fining action (removal of bubbles from the melt) and color generation, minor amounts of sulfate, chromium oxide, coal, iron oxide may be added, depending on the envisaged glass color.

A typical container glass batch composition contains 665 kg sand, 77 kg feldspar, 183 kg dolomite, 35 kg limestone and 240 kg soda ash, giving a total of 1200 kg. This batch yields 1000 kg of a glass with chemical composition of oxides in wt. % of approximately 72 SiO₂, 1.5 Al₂O₃, 4.0 MgO, 7.5 kg CaO and 15.0 kg Na₂O and an amount of 200 kg CO₂. Typically, 40-80 wt. % of cullet are used in the batch, which reduces the amount of released carbon dioxide (CO₂) to 120 kg - 40 kg. This amount of carbon dioxide (CO₂) is inevitably released from the raw materials soda-ash, limestone and dolomite when the batch is melted.

The production of glass, in particular of container glass, is an energy-consuming process. Sodium carbonate (Na2CO3) is one of the few synthetic raw materials used in the process. In an economical balance, sodium carbonate (Na₂CO₃) contributes in a considerable way to the overall energy demand of glass production. In the production process of sodium carbonate (Na₂CO₃) (Solvay process), approximately 3200 kWh per ton of sodium carbonate (Na₂CO₃) is needed. This makes sodium carbonate (Na₂CO₃) by far the most expensive component in a container glass batch.

For this reason, several approaches to reduce the amount of sodium carbonate (Na2CO3) in the batch have been presented in the state of the art.

In US-patent US 5,789,329 a glass composition is designed for boron-free glass fibers. The glass fibers have chemical compositions consisting essentially of silicon dioxide (SiO₂), calcium oxide (CaO), aluminum oxide (Al₂O₃), and magnesium oxide (MgO) without soda ash. These glass fiber compositions have values for delta T (T₃-T_{liq}) (i.e., the difference between the temperature at which the glass has a viscosity of approximately 1000 poise and the liquidus temperature) of at least about 52 K. This temperature difference is relatively short and bears the risk of crystallization. To form a glass container without high risk of crystallization, besides other points, the difference between T₃ and T_{liq} temperature must be larger.

European Patent EP 1 313 674 B1 refers to a soda lime glass composition suitable to be formed by the float process. To reduce productions costs, it is suggested lowering the amount of soda ash (Na₂O₃) in the batch without an increase in silica content. Sodium oxide (Na₂O) is replaced by calcium oxide (CaO) in the glass composition to achieve the same glass viscosity. The resulting glass comprises 6 wt.% to 12.4 wt. % sodium oxide (Na₂O) and 10.2 wt.% to 17 wt.% limestone (CaCO₃)

US patent application US 2019/0112219 A1 describes a method for production of sodium-free glass for use in photovoltaic devices. The resulting glass can be used as substrates for photovoltaic devices, for example, thin film photovoltaic devices such as CIGS photovoltaic devices. The glass is characterized by having strain points of 540° C, thermal expansion coefficients in the order of 6.5 to 10.5 ppm/°C and liquidus viscosities in excess of 50 000 poise. As such it is ideally suited for being formed into sheet by the fusion process. The glass contains high amounts of Barium oxide (BaO), Strontium oxide (SrO) and Potassium oxide (K₂O) which lead to optimal properties regarding thermal expansion coefficients of the glass which are required to avoid the thermal expansion mismatch with a substrate and a CIGS layer.

In patent application EP 2 465 829 A1 a sodium free sheet glass production is described. This glass composition is designed with Barium oxide (BaO), Strontium oxide (SrO) and Boron trioxide (B₂O₃). As neither Barium oxide, Strontium oxide nor Boron trioxide are used for the production of container glass, this glass composition is not suitable for production of container glass.

In patent US 8,993,465 B2, a glass composition designed for active matrix liquid crystal displays without Na₂O in the glass composition to control the physical properties is described. The composition shows the effect of Boron trioxide content in the glass composition on the physical properties of the glass.

In patent application WO 02/16277 A1 effects of reduction of sodium carbonate (Na₂CO₃) in final glass composition are shown on the melting, forming and mechanical properties of glass. The resulting glass composition contains sodium carbonate (Na₂CO₃) ratios vary between 6% - 12.2% and can be used for the production of float glass.

### Problem

The problem to be solved with the present invention is to enable a cost-effective production of glass which is characterized by a good energy balance.

### Solution

Based on the state of the art mentioned above, the aforesaid problem is solved by a mixture of raw materials for production of container glass which is free of sodium carbonate (Na₂CO₃).

For the purposes of the present invention, "free from" is understood to mean that no additional sodium carbonate (Na₂CO₃) is added. However, the presence of sodium carbonate (Na₂CO₃) cannot be completely ruled out due to traces in other materials and containers used in the production as well as other glass making equipment.

The mixture comprises Silicon dioxide (SiO₂), Aluminum oxide (Al₂O₃), Magnesium carbonate (MgCO₃) magnesium oxide (MgO) and Calcium carbonate (CaCO₃) or calcium oxide (CaO). Silicon dioxide (SiO₂) can by introduced by sand. Aluminum oxide (Al₂O₃) can be introduced by alumina or by any other suitable alumina carrier like, e.g. anorthosite, kaolinite, or combinations of them. Calcium carbonate (CaO) can be introduced by limestone or by any other suitable calcia carriere like, e.g burnt lime, quick lime, or combinations of them. Magnesium oxide (MgO) can be introduced by magnesium carbonate (MgCO₃) or by any other suitable magnesia carrier like, e.g. dolomite, or combinations of them.

Glass is a non-crystalline transparent amorphous solid which exhibits viscous Newtonian liquid behavior at high temperatures and becomes an elastic solid at low temperatures. It is known that glass does not have a typical, definable melting point. The transition to melting is rather gradual, whereby the transition is used to process the molten glass into the finished product, e.g. container glass. The process of the molten glass is dependent on the temperature, whereby there are some critical temperatures. As Newtonian behavior kinematic viscosity is used in this patent which is a measure of velocity. The viscosity decreases with increasing temperature of the glass melt. By reaching a certain temperature, namely a T₁-temperature, the raw materials used begin to melt. The T₁-temperature is defined as the temperature at which the viscosity of the glass melt is equal to 10 Pa*s, e.g. where the natural logarithm of the viscosity is 1. A working range of glass melt, namely a temperature range (ΔT) within the glass melt is processible, is defined as a temperature range between a working point and a softening point of the glass melt. The working point is reached when a batch, comprising a mixture of raw materials and cullet, just begins to soften. The softening point is reached when the glass melt is already so hot that is it too soft to control. These two temperatures are also referred to as T₄- and T₆-temperatures respectively, whereby the T₄-temperature is defined as the temperature at which the viscosity of the glass melt is equal to 10,000 Pa*s, e.g. where the natural logarithm of the viscosity is 4, and the T₆-temperature is defined as the temperature at which the viscosity of the glass melt is equal to 1,000,000 Pa*s, e.g. where the natural logarithm of the viscosity is 6. If the difference between the T₄- and T₆-temperature is low, the viscosity curve runs steeply. Hence, the temperatures for the corresponding viscosities are relatively close to each other and the time to process the glass melt is rather short. If the viscosity curve is flat, the time to process the glass melt is rather long.

Calculations and corresponding experiments have now shown that a decrease of sodium oxide (Na₂O) in the batch leads to a temperature shift of the T₄- and T₆-temperatures towards higher temperatures, whereby a difference between the two temperatures, also known as ΔT temperature, decreases. The glass is becoming shorter. However, the shift of the T₄- and T₆-temperature lies well within the range of temperatures that are feasible with common furnaces. At the same time, the reduction of sodium oxide (Na₂O) is still enhancing the dissolution of silicon dioxide.

It has been found that a temperature, at which the glass melt is typically formed into gobs that are later formed into a desired shape, namely a T₃-temperature, is stable for a batch with a reduced amount of sodium carbonate (Na₂CO₃) within a range of 21°C. Thus, conventional forming processes can be still used. The lower the amount of sodium carbonate (Na₂CO₃) is in the batch, the higher the T₄- and T₆-temperatures get. Nevertheless, an overall energy balance is improved compared to conventional batch comprising standard cullet with lower T₄- and T₆-temperatures because of the reduced amount of sodium carbonate (Na₂CO₃).

As stated before, production of sodium carbonate (Na₂CO₃) itself is highly energy intensive. Thus, with the mixture according to this invention significant cost-reduction in raw materials can be achieved resulting in an overall cost-reduction for the production of glass.

Furthermore, carbon dioxide emissions can be significantly reduced due to a reduced amount of sodium oxide (Na₂O) in the molten batch. Calculations have shown that the carbon dioxide emissions can be reduced up to 25% with regards to a conventional glass forming method which is especially advantageous regarding an environmental effect. Overall, an ecological balance of the container glass production is therefore improved.

In addition, problems related to the use of sodium carbonate (Na₂CO₃), especially soda bloom, soda evaporation and sodium carbonate (Na₂CO₃) related surface flaws, are also reduced.

Further, advantages of the composition of final article according to the present invention are improved mechanical properties due to change of elastic modulus. The glass strength is increased as compared to standard glass. This can be resulted in the option to produce containers with reduced wall thickness.

According to a preferred embodiment of the invention the mixture comprises between 59 wt.% and 62 wt.%, preferably 60 wt. %, more preferably 60.19 wt. %, Silicon dioxide (SiO₂), between 11 wt.% and 13 wt. %, preferably 12 wt.%, more preferably 12.28 wt. %, Aluminum oxide (Al₂O₃) and between 2.2 wt.% and 3.4 wt. %, preferably 2.8 wt.%, more preferably 2.83 wt. %, Magnesium carbonate (MgCO₃) with respect to a total amount of the mixture. In experiments it has been found that such a composition is particularly suitable in order to omit sodium carbonate (Na₂O₃) in the mixture.

In another preferred embodiment the mixture comprises between 10 wt.% and 25 wt. %, preferably between 14 wt. % and 22 wt. %, Calcium carbonate (CaCO₃) with respect to a total amount of the mixture.

According to a preferred embodiment the mixture comprises Titanium dioxide (TiO₂). By adding titanium dioxide to the mixture the T₃-, T₄- and T₆-temperatures are shifted to lower temperatures compared to glass melts without the addition of Titanium dioxide (TiO₂). Titanium dioxide (TiO₂) can be introduced by titania or by any other suitable titania carrier like, e.g calcium titanate, sphene , or combinations of them.

Compared to soda-lime-silica (SLS) glass production the heat to be removed from the molten glass in a certain time (can be called as forming time) is similar or even lower in soda free glass compositions. For soda free glass compositions, the forming time hence can be shorter compared to soda-lime-silica (SLS) glass compositions. Due to radiation and heat conduction dependencies, the heat exchange between the glass article and mould will be higher when the molten glass enters the mould with a higher temperature which means with a higher heat load.

In yet another embodiment, the amount of Titanium dioxide (TiO₂) is in the range of 1 wt. % to 4 wt. % with respect to a total amount of the mixture. This amount has been identified in experiments as an optional amount in order to lower the aforementioned critical temperatures.

The aforementioned problem is further solved by a method according to claim 6. Preferred embodiments are given in claims 7 to 10.

The method according to the present invention comprises several steps: in a first step cullet and a mixture according to one of the claims 1 to 5 are mixed to a batch. The resulting batch is then molten to a melt. An amount of the cullet and an amount of the raw material mixture are adjusted in such a way that an amount of sodium oxide (Na₂O) in the molten batch with respect to a total amount of the molten batch corresponds to a first predefined intermediate value. As a second step the first step is repeated whereby the cullet is derived from glass resulting at least partially from the batch according to the first step and the amount of the mixture according to one of the claims 1 to 5 in the batch is adjusted in such a way that the amount of sodium oxide (Na₂O) in the molten batch with respect to a total amount of the batch corresponds to a second predefined intermediate value. The second step is then continuously repeated until the amount of sodium oxide (Na₂O) in the batch with respect to a total amount of the batch reaches a target value.

With other words, a mixture according to one of the claims 1 to 5 is used and mixed with "standard cullet" which is derived from "standard glass". "Standard glass" as used herein, refers to glass with a composition according to the state of the art. Typically standard container glass comprises 70 - 74 wt. % silicon dioxide, 10 - 12.5 wt. % calcium, 11 - 14 wt. % sodium, 0.5 - 3.5 wt. % magnesium, 1 -3 wt. %. aluminum, 0.03 - 0.13 wt. % Iron(III) and 0.01 - 2 wt. % potassium (K₂O), with respect on a total amount of the batch, whereby standard container glass often also includes small fractions of Zinc (Zn), Iron (F), Manganese (Mn), Lithium (Li) and/or Cerium (Ce). The amount of sodium in standard container glass may also be in the range between 0 wt.% and 14 wt.%. In the context of this invention, "standard cullet" means cullet, namely crushed glass particles, derived from "standard glass", whereby the amount of sodium in the cullet may be in the range between 0 wt.% and 14 wt. %.

The resulting batch is used to produce glass with an amount of sodium oxide (Na₂O) which corresponds to a first predefined intermediate value. Naturally, glass resulting from this batch is formed to cullet at some point in the lifetime of this glass. The resulting cullet is then used in the production of glass in combination with a mixture according to this invention whereby the amount of the mixture is adjusted in such a way that the amount of sodium oxide (Na₂O) in the molten batch with respect to a total amount of the batch corresponds to a second predefined intermediate value. This batch is used to form glass which will end as cullet at some point again. The second step is then repeated with an adjusted amount of the mixture according to this invention. This step is then repeated until a target value of sodium carbonate (Na₂CO₃) is reached in the batch.

The method according to this invention is intended to effect a continuous reduction of the amount of sodium oxide (Na₂O) in final chemical composition of glass. By using a raw materials mixture with no added sodium carbonate (Na₂CO₃), the amount of sodium oxide (Na₂O) will decrease in the respective glass melt and hence in the glass itself. Cullet that is derived from this glass will have a reduced amount of sodium oxide (Na₂O) compared to standard cullet. When used to form a batch, the "new" cullet will contribute less sodium oxide (Na₂O) to the batch. By adding the mixture according to this invention to the "new" cullet, the resulting batch will have a further reduced amount of sodium oxide (Na₂O). This process will continue until the amount of sodium oxide (Na₂O) reaches the a minimum amount of sodium oxide (Na₂O). By lowering the amount of sodium oxide (Na₂O) in the batch it can even be lowered to the smallest possible amount of sodium carbonate (NaO₃) and sodium oxide (Na₂O), resulting in the nearly absence of sodium oxide (Na₂O) in glass. However, the minimum total content of sodium oxide (Na₂O) in glass resulting from the mixture is never less than 2 wt. % as sodium carbonate (Na₂O₃) always originates from impurities of natural raw materials making it impossible to free the glass from sodium oxide (Na₂O) completely.

In certain embodiments, the first intermediate value is 10 wt. %. Hence, the amount of the mixture used in the batch is adjusted in such a way that the amount of sodium oxide (Na₂O) in the molten batch melt is equal to 10 wt. % in respect of a total amount of the molten batch. For example, if the amount of sodium oxide (Na₂O) in the currently available cullet is 14 wt. % then 70 wt. % of cullet can be used in combination with the mixture of glass forming materials in order to get a molten batch that contains 10 wt. % of sodium oxide (Na₂O).

In another preferred embodiment the second intermediate value is 8 wt. %. Hence, if the first predefined intermediate value of for example 10 wt. % is reached, the second intermediate value is aimed for. If the first intermediate value was 10 wt. %, then 80 wt. % of cullet derived from glass with an amount of sodium oxide (Na₂O) of 10 wt. % can be used in order to get a molten batch that contains 8 wt. % of sodium oxide (Na₂O).

According to a preferred embodiment repeating the first step third time in order to reach a third intermediate value, whereby the third intermediate value is preferably 5 wt. %. If the second intermediate value was 8 wt. %, then 62.5 wt. % of cullet derived from glass with an amount of sodium oxide (Na₂O) of 8 wt. % can be used in order to get a batch that contains 5 wt. % of sodium oxide (Na₂O).

In yet another embodiment, the target value is 2 wt. % or less. As stated before, a reduction of sodium oxide (Na₂O) below 2 wt. % is possible. However, this amount of sodium carbonate (Na₂O) is not coming from carbonate-containing raw materials. To get a batch with an amount of 2 wt. % sodium oxide (Na₂O) 40 wt. % of cullet with 5 wt. % of sodium oxide (Na₂O) in combination with the mixture of glass forming materials can be used.

The composition according to this invention is preferably used to produce container glass, e.g. glass for bottles, jars, drinkware and bowls. However, the composition can be also used for tableware or float glass.

The aforementioned problem is also solved by glass resulting at least partially from a mixture according to one of the claims 1 to 5, whereby a temperature (T₃-temperature) at which the viscosity of the glass is equal to 1,000 Pa*s lies between 1127 °C and 1275 °C. In comparison to a glass melt according to the state of the art shifts to higher temperatures. It has been found that the T₃-temperature is for glass compositions with a reduced amount of sodium oxide (Na₂O) within a range of 20 - 80 K higher than in given glass composition with sodium oxide (Na₂O). Thus, advantageously, a conventional forming process can be still used.

In certain embodiments, a temperature (T₄-temperature) at which the viscosity of the glass is equal to 10,000 Pa*s lies between 1073 °C and 1166 °C. The T₄-temperature is shifted towards a higher temperature. According to yet another preferred embodiment a temperature (T₆-temperature) at which the viscosity of the glass is equal to 1,000,000 Pa*s lies between 884°C and 1009 °C. The T₆-temperature is shifted also shifted towards a higher temperature. In another preferred embodiment a difference between the temperature (T4-temperature) at which the viscosity of the glass is equal to 10,000 Pa*s and the temperature (T6-temperature) at which the viscosity of the glass is equal to 1,000,000 Pa*s lies between 157 K and 189 K.

Calculations and corresponding experiments have now shown that a decrease of the sodium oxide (Na₂O) level in the glass leads to a shift of the viscosity-temperature curve to higher temperatures and to a temperature shift of the T₃-, T₄- and T₆-temperatures towards higher temperatures, whereby a difference between the latter two temperatures, also known as working range, decreases. The glass becomes shorter. However, the shift of the temperatures lies well within the range of temperatures that are feasible with common forming machines. The time-temperature regime of the process requires adjustment, though.

If, however, the mixture comprises titanium dioxide (TiO) the T₃-temperature lies between 1207 °C and 1275 °C. Furthermore, preferably the T₄-temperature lies between 1054 °C and 1166 °C. In addition, in another preferred embodiment the T₆-temperature lies between 871°C and 1009 °C. Overall, the addition of titanium dioxide (TiO₂) reduces the T₃-, T₄- and T₆-temperatures and the mixture with titanium dioxide (TiO₂) addition is shifted to lower temperatures compared to soda free compositions without titanium dioxide.

### Description of the drawings:

The present invention is illustrated with reference to the appended figures, in which:
- Figure 1 is:: a graph showing one example of DSC curves of a glass melt according to the present invention.
- Figure 2 is:: a graph showing one example of DSC curves of a glass melt according to another embodiment of the present invention.
- Figure 3 is:: a graph showing the relationship between dynamic viscosity and temperature for mixtures of raw materials according to the present invention.
- Figure 4 is:: a graph showing the relationship between dynamic viscosity and temperature for mixtures of raw materials according to the present invention with the addition of titanium dioxide (TiO₂).

The method according to the present invention is aiming to use the maximum amount of standard cullet in the market. In this perspective, compositions of a glass melt resulting from standard cullet and mixtures of raw materials according to the present invention are listed in Table 1. In Table 2 compositions of glass melts with the addition of Titanium dioxide (TiO₂) are listed.

**Table 1: Compositions of a glass melt resulting from cullet and mixtures of raw materials according to the present invention**

| Component | Reference | Y-N0 | Y-N2 | Y-N5 | Y-N8 | Y-N10 |
|---|---|---|---|---|---|---|
| SiO₂ [wt. %] | 72.00 | 60.19 | 60.19 | 60.19 | 60.19 | 60.19 |
| Al₂O₃ [wt. %] | 1.00 | 12.28 | 12.28 | 12.28 | 12.28 | 12.28 |
| MgO [wt. %] | 3.00 | 2.83 | 2.83 | 2.83 | 2.83 | 2.83 |
| CaO [wt. %] | 9.00 | 24.70 | 22.70% | 19.7 | 16.70 | 14.70 |
| Na₂O [wt. %] | 14.00 | ---- | 2.00 | 5.00 | 8.00 | 10.00 |
| K₂O [wt. %] | 1.00 | ---- | ---- | ---- | ---- | ----- |
| SUM [wt. %] | 100.00 | 100.00 | 100.00 | 100.00 | 100.00 | 100.00 |

**Table 2: Compositions of a glass melt resulting from cullet and mixtures of raw materials according to the present invention with the addition of Titanium dioxide (TiO₂)**

| Component | Reference | Y-T2A-N0 | Y-T2A-N2 | Y-T2A-N5 | Y-T2A-N8 | Y-T2A-N10 |
|---|---|---|---|---|---|---|
| SiO₂ | 72.00 | 59.19 | 59.19 | 59.19 | 59.19 | 59.19 |
| TiO₂ | ---- | 2.00 | 2.00 | 2.00 | 2.00 | 2.00 |
| AL₂O₃ | 1.00 | 11.28 | 11.28 | 11.28 | 11.28 | 11.28 |
| MgO | 3.00 | 2.83 | 2.83 | 2.83 | 2.83 | 2.83 |
| CaO | 9.00 | 24.70 | 22.70 | 19.70 | 16.70 | 14.70 |
| Na₂O | 14.00 | ---- | 2.00 | 5.00 | 8.00 | 10.00 |
| K₂O | 1.00 | ---- | ---- | ---- | ---- | ---- |
| SUM | 100.00 | 100.00 | 100.00 | 100.00 | 100.00 | 100.00 |

A mixture of raw materials according to the present invention comprises Silicon dioxide (SiO₂), aluminum oxide (Al₂O₃), magnesium carbonate (MgO₃) or magnesium oxide (MgO) and calcium carbonate (CaO₃) or calcium oxide (CaO₂). The mixture can comprise between 59 wt.% and 62 wt.%, preferably 60 wt. %, more preferably 60.19 wt. %, Silicon dioxide (SiO₂), between 11 wt.% and 13 wt. %, preferably 12 wt.%, more preferably 12.28 wt. %, Aluminum oxide (Al₂O₃) and between 2.2 wt.% and 3.4 wt. %, preferably 2.8 wt.%, more preferably 2.83 wt. %, Magnesium carbonate (MgCO₃) with respect to a total amount of the mixture. The mixture of raw materials is free of sodium carbonate (Na₂CO₃).

There are two sources of cullet for (container) glass industry: external cullet (standard cullet) and internal cullet (own factory cullet). To enable the use of external recycling standard cullet (with typically 10-14 wt. % of sodium oxide (Na₂O)), a total amount of sodium oxide (Na₂O) in the glass melt of up to 10 wt. % is tolerated. In the following considerations, a percentage of 14 wt. % of sodium oxide (Na₂O) is assumed in the glass. Steps of the method are illustrated in Table 3.

"Reference" shows the composition of "standard cullet" in the market and will be used as much as possible for producing new glass composition. In this example standard cullet comprises 10 wt. % to 14 wt. % of sodium oxide (Na₂O). Y-N0, Y-N2, Y-N5, Y-N8 and Y-N10 represent the batch composition with a sodium oxide (Na₂O) content changing between 10 wt. %, 8 wt. %, 5 wt. % and 2 wt. %. 0 wt. % of sodium oxide (Na₂O) is only compiled as reference. To obtain these batch compositions the amount of the mixture of raw materials according to this invention and the amount of cullet will be adjusted accordingly.

The method of continuously reducing the content of sodium oxide (Na₂O) in glass can start with batch compositions Y-N10 or Y-N8 and standard cullet. However, in Europe, high cullet contents are typical, but there are many sites in the world where cullet is scant and cullet levels hardly reach 40-50 wt. %. At these sites, batch compositions Y-N8 and Y-N5 may be used right from the start.

As a first step of the method the aim is to change the amount of 14 wt. % of sodium oxide (Na₂O) in glass to 10 wt. % of sodium oxide (Na₂O). So, the amount of standard cullet that can be used in the batch is up to 70 wt. % of the standard cullet to maintain 10 wt. % of sodium oxide (Na₂O) in the glass melt and the resulting glass (see step 1 in Table 3).

**Table 3: Steps of the method**

| Step | Amount of sodium oxide (Na₂O) in cullet [wt. %] | Amount of cullet in batch [wt. %] | Amount of mixture of raw materials in batch [wt. %] | Amount of sodium oxide (Na₂O) in batch [wt. %] |
|---|---|---|---|---|
| 1 | 14 | 70 | 30 | ~ 10 |
| 2 | 10 | 80 | 20 | 8 |
| 3 | 8 | 62.5 | 37.5 | 5 |
| 4 | 5 | 40 | 60 | 2 |

After a certain time, the cullet derived from glass with the adjusted amount of sodium oxide (Na₂O) will be diluted to 10 wt. % of sodium oxide (Na₂O) which will enable to lower the amount of sodium oxide (Na₂O) to a second predefined intermediate of 8 wt. % of sodium oxide (Na₂O) in a second step. Factory cullet (internal cullet) will have low a low amount of sodium oxide (Na₂O) right from the start. In switching from 10 wt. % sodium oxide (Na₂O) to 8 wt. % of sodium oxide (Na₂O) in the glass melt 80 % of cullet can be used. With the use of 80 % of cullet in the batch, the glass melt will have 8 wt. % of sodium oxide (Na₂O) (see step 2 in Table 3).

After a certain time, cullet derived from glass will come closer to a sodium oxide (Na₂O) content of 8 wt. %. Then switching from 8 wt. % to 5 wt. % of sodium oxide (Na₂O) can be realized. The maximum ratio of cullet from the 8% sodium oxide (Na₂O) containing cullet will be 62.5% to maintain the 5% of sodium oxide (Na₂O) in the glass melt (see step 3 in Table 3).

When the sodium oxide (Na₂O) in the cullet in the market come closer to 5 wt. % another step will be taken to reduce the sodium oxide (Na₂O) content to 2 wt. %. The maximum ratio of cullet from the 5 wt. % sodium oxide (Na₂O) containing cullet will be 40% to maintain the 2 wt. % of sodium oxide (Na₂O) in the glass melt (see step 4 in Table 3). When the sodium oxide (Na₂O) in the cullet which is existing in the market come closer to 2 wt. % the economical limit is reached, as a certain amount of sodium oxide (Na₂O) always comes from other raw materials such as feldspar, leading to a sodium oxide (Na₂O) content of approx. 2 wt. % in the final glass. However, as this sodium oxide (Na₂O) is not coming from carbonate-containing raw materials and it is economically not sensible to decrease the sodium oxide (Na₂O) in the final glass to 0 % at the present stage, the limit of the transition strategy is reached. Other steps could be taken to reduce the sodium oxide (Na₂O) content to 0%, but again, as mentioned, at the current stage this is not regarded as sensible.

The amounts of sodium oxide (Na₂O) in the final glass are given in Table 4. As can be seen from Table 4 no sodium oxide (Na₂O) is brought into the glass intentionally. Sodium oxide (Na₂O) is only present in the glass due to the addition of cullet and due to impurities in other materials.

**Table 4: Amounts of sodium oxide in batch**

| Amount of sodium oxide in final glass | Sodium oxide coming from cullet | Sodium oxide coming from raw materials like feldspar | Sodium oxide coming from Soda ash as raw material |
|---|---|---|---|
| 12 % (as today) | 6 grams | 0.24 grams | 5.76 grams |
| 10 % (first step example) | 9.8 grams | 0.20 grams | None |
| 8 % (second step example) | 7.84 grams | 0.16 grams | None |
| 5% (third step example) | 4.90 grams | 0.10 grams | None |
| 2% (fourth step example) | 1.96 grams | 0.04 grams | None |

Intermediate steps are also thinkable, depending to the amount of cullet that can be used. The mixture of raw materials and the method according to this invention are preferably used to produce container glass, e.g., glass for bottles, jars. However, the mixture and the method may be also used for tableware or float glass.

Critical temperatures for the glass melts given in Table 1 and Table 2 are given in Table 5.

**Table 5: T₃-, T₄- and T₆-temperatures of the glass melts from Table 1 and Table 2**

| **Composition** | **T3** | **T4** | **T6** | **ΔT(4-6)** | **ΔT(3-liq)** | **Tliq** |
|---|---|---|---|---|---|---|
| Reference | 1183°C | 1017°C | 816°C | 201 K | 173 K | 1010°C |
| Y-N0 | 1275°C | 1166°C | 1009°C | 157 K | 117 K | 1158°C |
| Y-N2 | 1266°C | 1146°C | 980°C | 166 K | 96 K | 1170°C |
| Y-N5 | 1251°C | 1116°C | 940°C | 176 K | 74 K | 1177°C |
| Y-N8 | 1236°C | 1089°C | 905°C | 184 K | 82 K | 1154°C |
| Y-N10 | 1227°C | 1073°C | 884°C | 189 K | 105 K | 1122°C |
| Y-T2A-N0 | 1262°C | 1151°C | 997°C | 154 K | 82 K | 1180°C |
| Y-T2A-N2 | 1250°C | 1130°C | 968°C | 162 K | 79 K | 1171°C |
| Y-T2A-N5 | 1233°C | 1099°C | 927°C | 172 K | 62 K | 1171°C |
| Y-T2A-N8 | 1217°C | 1071°C | 892°C | 179 K | 76 K | 1141°C |
| Y-T2A-N10 | 1207°C | 1054°C | 871°C | 183 K | 100 K | 1107°C |

All sodium oxide (Na₂O)-free glass melts are within a higher forming temperature range compared to traditional soda-lime-silica (SLS) glass. The addition of Titanium (TiO₂) reduces the T₃-, T₄- and T₆-temperatures of the glass melts. For example, T₄- and T₆-temperatures for Y-N5 and Y-T2A-N5 can be listed as 1116°C - 940°C and 1099°C - 927°C respectively. Compared to soda-lime-silica (SLS) glass production the heat to be removed from the molten glass in a certain time (can be called as forming time) is similar or even lower in soda free glass. For soda free glass, the forming time hence can be shorter compared to soda-lime-silica (SLS) glass. Due to radiation and heat conduction dependencies, the heat exchange between the glass article and mold will be higher when the molten glass enters the mold with a higher temperature which means with a higher heat load.

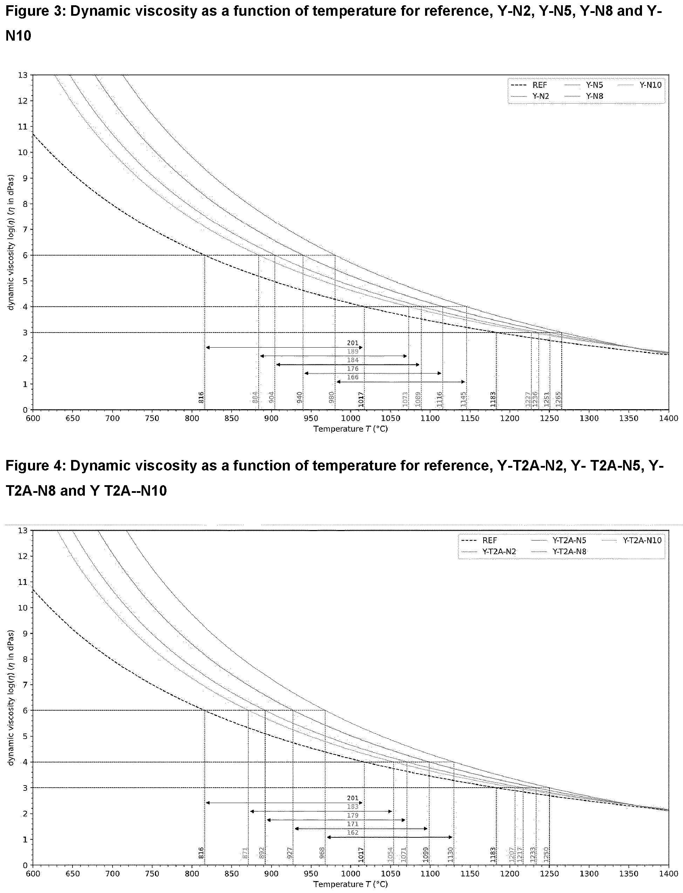

Calculations and corresponding experiments have now shown that a decrease of sodium oxide (Na₂O) in the batch leads to a temperature shift of the T₄- and T₆-temperatures towards higher temperatures, whereby a difference between the two temperatures, also known as ΔT temperature, decreases. Glass compositions with significantly reduced sodium oxide (Na₂O) content are "short glasses" which means the slope of the viscosity curve is steeper when compared conventional glass (reference), as seen in Figures 3 and 4. Short glass means the process window for the forming requires faster action because the temperature has a stronger influence on the forming. At this point the so-called "length" of glass can be followed by the temperature difference (ΔT) of the T₄-temperature and the T₆-temperature. For example, ΔT of Y-N5 and Y-T2A-N5 can be listed as 176 K - 172 K, respectively. However, the shift of the T₄- and T₆-temperature lies well within the range of temperatures that are feasible with common furnaces. At the same time, the reduction of sodium carbonate (Na₂CO₃) and oxide (Na₂O) is still enhancing the dissolution of silicon dioxide (SiO₂).

Further, it has been found that a temperature, at which the glass melt is typically formed into gobs that are later formed into a desired shape, namely a T₃-temperature, is stable for glass melts with a reduced amount of sodium oxide (Na₂O) within a range of 21°C. Thus, conventional forming processes can be still used. The lower the amount of sodium oxide (Na₂O) is in the molten batch, the higher the T₄- and T₆-temperatures get. Nevertheless, an overall energy balance is improved compared to conventional batch comprising standard cullet with lower T₄- and T₆-temperatures because of the reduced amount of sodium oxide (Na₂O).

These above-mentioned combined effects can open another process window for faster production of glass articles because it enables to remove more heat from the molten glass gob and the shortening of molten glass requires a faster process to convert molten glass to solid article. With this new glass compositions, the forming time can be shorter compared to conventional container glass.

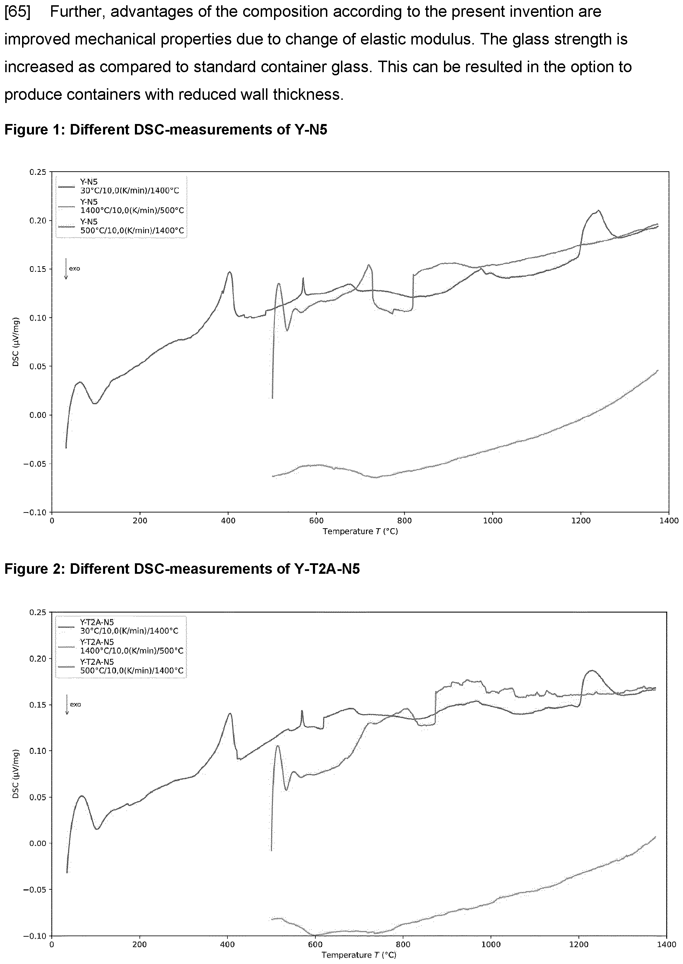

The crystallization tendency was investigated also for the mentioned glasses. As can be seen exemplarily from the DSC-measurement in Figures 1 and 2, no crystallization occurred under the given experimental procedure and composition of Y-N5 and Y-T2A-N5.

As stated before, production of sodium carbonate (Na₂CO₃) itself is highly energy intensive. Thus, with the composition according to this invention significant cost-reduction in raw materials can be achieved resulting in an overall cost-reduction for the production of container glass.

Furthermore carbon dioxide emissions can be significantly reduced due to a reduced amount of sodium oxide (Na₂O) in the molten batch. Calculations have shown that the carbon dioxide emissions can be reduced up to 25% with regards to a conventional glass forming method which is especially advantageous regarding an environmental effect. Overall, an ecological balance of the container glass production is therefore improved.

In addition problems related to the use of sodium carbonate (Na₂O), especially soda bloom, soda evaporation and sodium carbonate (Na₂O) related surface flaws, are also reduced.

## Claims

1. Mixture of raw materials for production of container glass comprising
- Silicon dioxide (SiO₂),
- Aluminum oxide (Al₂O₃),
- Magnesium carbonate (MgCO₃) or magnesium oxide (MgO) and
- Calcium carbonate (CaCO₃) or calcium oxide (CaO),
**characterized in that** of the mixture is free of sodium carbonate (Na₂CO₃).

2. Mixture according to claim 1, **characterized in that** the mixture comprises between 59 wt.% and 62 wt.%, preferably 60 wt. %, more preferably 60.19 wt. %, Silicon dioxide (SiO₂), between 11 wt.% and 13 wt. %, preferably 12 wt.%, more preferably 12.28 wt. %, Aluminum oxide (Al₂O₃) and between 2.2 wt.% and 3.4 wt. %, preferably 2.8 wt.%, more preferably 2.83 wt. %, Magnesium carbonate (MgCO₃) with respect to a total amount of the mixture.

3. Mixture according to claim 1 or 2, **characterized in that** the mixture comprises between 10 wt.% and 25 wt. %, preferably between 14 wt. % and 22 wt. %, Calcium carbonate (CaCO₃) with respect to a total amount of the mixture.

4. Mixture according to one of claims 1 to 3, **characterized in that** the mixture comprises Titanium dioxide (TiO₂).

5. Mixture according to claim 4, **characterized in that** the amount of Titanium dioxide (TiO₂) is in the range of 1 wt. % to 4 wt. % with respect to a total amount of the mixture.

6. Method for continuously reducing the content of sodium oxide (Na₂O) in glass, comprising the following steps:
a) Mixing cullet and a mixture according to one of the claims 1 to 5 to a batch and melting the batch, whereby an amount of the cullet and an amount of the mixture are adjusted in such a way that an amount of sodium oxide (Na₂O) in the molten batch with respect to a total amount of the molten batch corresponds to a first predefined intermediate value,
b) Repeating step a., whereby the cullet is derived from glass resulting at least partially from the batch according to step a. and the amount of the mixture according to one of the claims 1 to 5 in the batch is adjusted in such a way that the amount of sodium oxide (Na₂O) in the molten batch with respect to a total amount of the batch corresponds to a second predefined intermediate value,
c) Continuously repeating step a. until the amount of sodium oxide (Na₂O) in the batch with respect to a total amount of the batch reaches a target value.

7. Method according to claim 6, **characterized in that** the first intermediate value is 10 wt. %.

8. Method according to claim 6 or 7, **characterized in that** the second intermediate value is 8 wt. %.

9. Method according to claim 8, **characterized by** repeating step a. a third time in order to reach a third intermediate value, whereby the third intermediate value is preferably 5 wt. %.

10. Method according to one of the claims 6 to 9, **characterized in that** the target value is 2 wt. % or less.

11. Container glass resulting at least partially from a mixture according to one of the claims 1 to 5, **characterized in that** a temperature (T₃-temperature) at which the viscosity of the glass is equal to 1,000 Pa*s lies between 1127 °C and 1275 °C.

12. Container glass resulting at least partially from a mixture according to one of the claims 1 to 5, **characterized in that** a temperature (T₄-temperature) at which the viscosity of the glass is equal to 10,000 Pa*s lies between 1073 °C and 1166 °C.

13. Container glass resulting at least partially from a mixture according to one of the claims 1 to 5, **characterized in that** a temperature (T₆-temperature) at which the viscosity of the glass is equal to 1,000,000 Pa*s lies between 884°C and 1009 °C.

14. Container glass resulting at least partially from a mixture according to one of the claims 1 to 5, **characterized in that** a difference between the temperature (T₄-temperature) at which the viscosity of the glass is equal to 10,000 Pa*s and the temperature (T₆-temperature) at which the viscosity of the glass is equal to 1,000,000 Pa*s lies between 157 K and 189 K.

15. Container glass resulting at least partially from a mixture according to one of the claims 4 or 5, **characterized in that** the temperature (T₃-temperature) at which the viscosity of the glass is equal to 1,000 Pa*s lies between 1207 °C and 1275 °C.

16. Container glass resulting at least partially from a mixture according to one of the claims 4 or 5, **characterized in that** a temperature (T₄-temperature) at which the viscosity of the glass is equal to 10,000 Pa*s lies between 1054 °C and 1166 °C.

17. Container glass resulting at least partially from a mixture according to one of the claims 4 or 5, **characterized in that** a temperature (T₆-temperature) at which the viscosity of the glass is equal to 1,000,000 Pa*s lies between 871°C and 1009 °C.
